# EUROPEAN PATENT APPLICATION

(11) **EP 3 945 723 A1**
(43) Date of publication of application: **02.02.2022**
(21) Application number: 21187858.2
(22) Date of filing: 27.07.2021
(51) Int. Cl.: H04N 21/6547, H04N 21/485

(54) **A TELEVISION AND A METHOD OF CONTROLLING VIDEO SETTINGS THEREOF**

(30) Priority: 30.07.2020 TR 202012162
(71) Applicant: Arçelik Anonim Sirketi, 34445 Istanbul (TR)
(72) Inventor: ONDER, Onur, 34445 Istanbul (TR); SEN, Halil, 34445 Istanbul (TR)

(57) **Abstract**

The present invention relates to a television (1) and a method of controlling video settings of the television (1). The television (1) comprises video signal receiving means (2) for receiving video signals, a memory (3) for storing a plurality of preset video settings, a user interface (4) for receiving user input for manipulating preset video settings, a display (5) for displaying processed video signals, and processing means (6) for processing received video signals in accordance with a selected preset video setting and supplying processed video signals to the display (5).

## Description

The present invention relates to a television and a method of controlling video settings of the television.

Most modern televisions come with preset video settings known as display modes or picture modes, among which a user can select to apply to images displayed on the television screen. The preset picture modes are designed by the manufacturer for specific use or content, and include, for example, standard, dynamic, cinema, game, and sports modes. User of the television can easily navigate through different picture modes and select the one that offers the best viewing experience. Picture modes use different settings for colour temperature, backlight, etc.

Three-dimensional look-up tables (3D LUT's) with specific file formats are used in film industry and movie production chain in mapping one colour space to another, especially for purposes of retaining desired colour properties, such as RGB values, across several imaging devices. In televisions known in the technique, 3D LUT's are employed for purposes of storing different picture mode values, wherein a user can browse and select from available modes. Although there are ongoing efforts to apply 3D LUT techniques in different manners in televisions, these are mainly directed to advanced calibration techniques wherein expensive additional software and hardware such as LUT boxes and colour analysers are required. Therefore, there is need for improvements allowing users control, create and manage picture modes in televisions in a more intuitive and cost-effective manner.

In the state of the art, United States patent application US 2014002734 A1 discloses an LCD television comprising a colour mixing section. The colour mixing section utilizes a look-up table for mixing colours according to a selected display mode.

The aim of the present invention is to overcome the shortcomings of prior art by realization of a television and a control method thereof wherein video settings, and particularly picture modes, can be controlled and managed by the user. Accordingly, a user can easily add new picture modes and manage existing picture modes to obtain customized video settings without having to use professional tools. Another related purpose of the invention is realization of a television provided with enhanced number and variety of preset video setting options. Given that the user is not bound to use only a limited number of picture modes defined by factory settings, the user experience and satisfaction is also improved.

The television realized in order to attain the aim of the present invention, explicated in Claim 1 and the respective claims thereof, comprises video signal receiving means for receiving video signals, a memory for storing a plurality of preset video settings such as picture modes, a user interface for receiving user input for manipulating preset video settings, a display for displaying processed video signals, and processing means for processing received video signals in accordance with a selected preset video setting and supplying processed video signals to the display.

In the preferred embodiment of the present invention, the memory comprises a look-up table (LUT) database for storing a 3D LUT file for each preset video setting. Said 3D LUT files are preferably Cube files with one of the formats commonly used in film industry and movie production chain. The files can be in .cube format, as well as in .3dl, .csv, .m3d, .clt, .itx, .txt, .dat, or .mga format.

The processing means may be configured to modify, upon receiving a respective input for manipulating preset video settings, the contents of the LUT database in accordance with said input. Said modification may comprise rearranging 3D LUT files, renaming 3D LUT files, importing a new 3D LUT file, deleting a 3D LUT file, and/or exporting a 3D LUT file. A user can provide input for manipulating preset video settings via a control menu presented on a user interface, for example on display of the television. Accordingly, design and management of picture modes can be conveniently done during both manufacturing and after-sales use of the television. In this way, preset video settings files can be accessed and modified in a quick and flexible manner, thereby advantageously reducing manufacturing time and costs, and improving user satisfaction. Due to facilitated design and practical management of picture modes by the present invention, an extended number of picture modes can be feasibly offered to customers.

In an embodiment, the processing means is configured to receive, via the user interface, a command to import a 3D LUT file from an external device connected to the television; import said 3D LUT file from the external device; and store the imported 3D LUT file in the LUT database. The LUT database may comprise storage area allocated for imported 3D LUT files.

The processing means may also be is configured to receive, via the user interface, a command to export a 3D LUT file from the LUT database (7) to an external device connected to the television; and export said 3D LUT file to the external device.

With options to import and/or export 3D LUT files, hence corresponding picture modes, several picture modes can be flexibly transferred, modified, and edited per custom personal preferences across different devices and platforms. 3D LUT files of respective picture modes can thus be easily used as professional video filters without requiring additional equipment or expertise.

According to an aspect of the present invention, there is provided an image display system comprising the television. The display system may be a smart image display system or a video wall system, suitable for domestic or commercial use.

According to another aspect of the present invention, there is provided a method of controlling video settings of the television. The method comprises: connecting the television to an external device, receiving an import command for importing a 3D LUT file from the external device, selecting one or more files to be imported, importing selected one or more files to television, and saving imported one or more files in the LUT database. The method may further comprise selecting an imported file and applying preset video settings associated with selected file to video signals.

The method may additionally or alternatively comprise: connecting the television to an external device, receiving an export command for exporting a 3D LUT file from the LUT database to the external device, selecting one or more files to be exported, and exporting selected one or more files to the external device.

Any of the methods in accordance with the present invention may be implemented at least partially using software, e.g. computer programs. Any of the steps described in relation to any of the aspects or embodiments of the invention may be carried out under the control of a set of one or more processors. The present invention thus also extends to a computer program comprising computer readable instructions executable to perform, or to cause a device to perform, a method according to any of the aspects or embodiments of the invention.

Thus, in another aspect of the present invention, there is provided computer software operable, when executed on a television, to cause one or more processors to perform a method as described above. The computer software may be stored on a non-transitory computer-readable medium.

The television and the method of controlling video settings thereof realized in order to attain the aim of the present invention is illustrated in the attached figures, where:
Figure 1 is the schematic view of a television according to an embodiment of the invention,
Figure 2 is a flow diagram of method of controlling video settings according to an embodiment of the invention, and
Figure 3 is a flow diagram of method of controlling video settings according to an embodiment of the invention.

The elements illustrated in the figures are numbered as follows:
1. Television
2. Video signal receiving means
3. Memory
4. User interface
5. Display
6. Processing means
7. Look-up table (LUT) database

The television (1) comprises: video signal receiving means (2) for receiving video signals, a memory (3) for storing a plurality of preset video settings, a user interface (4) for receiving user input for manipulating preset video settings, a display (5) for displaying processed video signals, and processing means (6) for processing received video signals in accordance with a selected preset video setting and supplying processed video signals to the display (5).

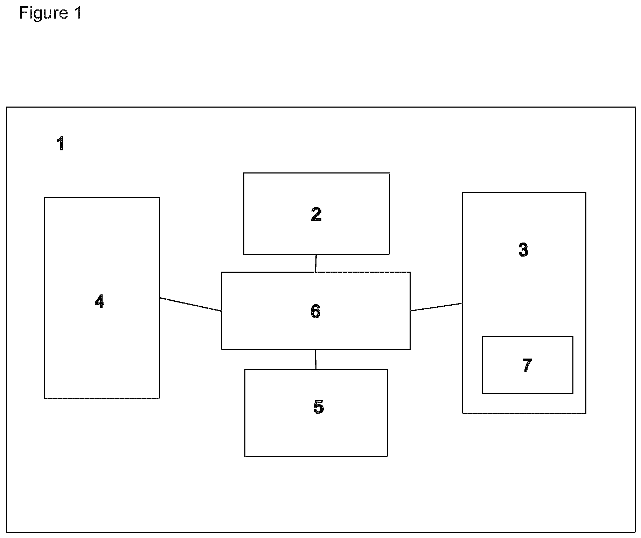

In a preferred embodiment, the memory (3) comprises a look-up table (LUT) database (7) for storing a 3D LUT file, preferably in .cube format, for each preset video setting. (Figure 1)

The user interface (4) may comprise an interactive menu displayed on display (5). User input may be provided with help of conventional integral or external means, such as a keypad, remote control device, etc.

Video signal received from a source is processed along a video data path before being displayed on the display (5). Video data path comprises various processing steps concerning filtering, scaling, and dithering. Within this process, in accordance with selected preset video setting, e.g. picture mode, the processing means (6) fetches a corresponding 3D LUT file from the LUT database (7) as input, and applies the values inscribed in said 3D LUT file to the video signal. In this manner, video presented on display (5) of the television (1) is displayed in selected picture mode.

In an embodiment, the processing means (6) is further configured to modify, upon receiving a respective input for manipulating preset video settings, the contents of the LUT database (7) in accordance with the input. Modifying contents of the LUT database (7) comprises at least one of rearranging 3D LUT files, renaming 3D LUT files, importing a new 3D LUT file, deleting a 3D LUT file, and exporting a 3D LUT file.

In preferred embodiments, user provides input by opening an interactive menu comprised in the user interface (4), and by selecting relevant items in the menu and sub-menus thereof.

Factory settings of the television (1) may be configured to restrict modification of some of the files in the LUT database (7) by a user. For example, files in the LUT database (7) may be grouped and preferably also presented in the menu as 'factory modes' and 'user-defined' modes. The user may only be allowed to rename and/or delete user-defined modes.

For purposes of importing 3D LUT files, that is picture modes, to the television (1), the processing means (6) may be configured to receive, via the user interface (4), a command to import a 3D LUT file from an external device connected to the television (1); import said 3D LUT file from the external device; and store the imported 3D LUT file in the LUT database (7). The LUT database (7) may comprise storage area allocated for imported 3D LUT files. If the 3D LUT files in the LUT database (7) are partitioned as 'factory modes' and 'user-define modes' as mentioned above, the storage area allocated to imported 3D LUT files is then represented under the latter group.

For purposes of exporting 3D LUT files from the television (1) to an external device, on the other hand, the processing means (6) may be configured to receive, via the user interface (4), a command to export a 3D LUT file from the LUT database (7) to an external device connected to the television (1); and export said 3D LUT file to the external device.

The external device from/to which a 3D LUT file is imported/exported can be connected to the television (1) via wired and/or wireless means known in the technique. The connection may comprise an HDMI cable connection, a USB connection, a wireless network, Bluetooth connection, or Internet connection. Accordingly, the external source/destination device for transferring 3D LUT files may be any mobile device or a remote device such as a server. In embodiments where the television (1) is equipped with means for Internet connection, thus, 3D LUT files per picture modes can be transferred between the television (1) and a remote device directly via the Internet. Said 3D LUT files, in other words, can be downloaded from the cloud directly to the television (1) and/or from the television (1) directly to the cloud.

The user interface (4), for example a sub-menu pertaining to picture modes, preferably comprises import and/or export options, such as dedicated selection items, for initiating import and/or export of a picture mode from/to an external source. Said options may comprises dedicated sub-options per connection type between the television (1) and the external device. The sub-options may comprise items for at least one of USB import, online import, USB export, and online export.

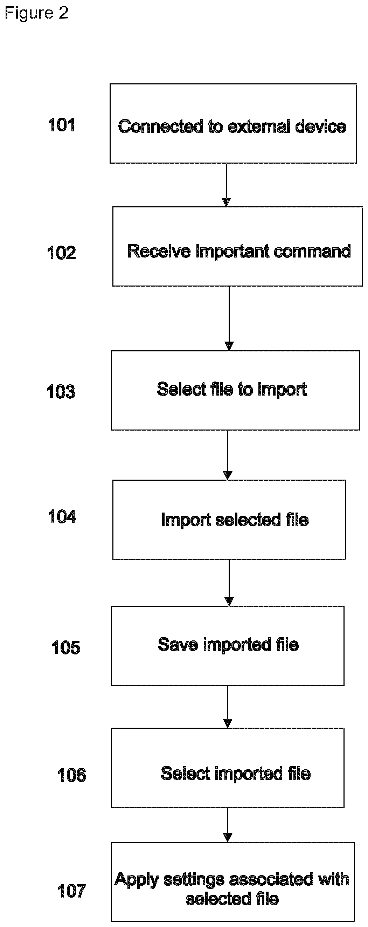

According to an embodiment, the method of controlling video settings of the television (1) comprises: connecting (101) the television (1) to an external device, receiving (102) an import command for importing a 3D LUT file from the external device, selecting (103) one or more files to be imported, importing (104) selected one or more files to television (1), and saving (105) imported one or more files in the LUT database (7). The method may additionally comprise searching for connected external devices, and displaying the list of available connected external devices, preferably with a list of relevant files stored therein, for a selection therefrom. Once imported from the external source, the 3D LUT files can be employed by the television (1) as any other picture mode available in the LUT database (7). The method may therefore further comprise selecting (106) an imported file and applying (107) preset video settings associated with selected file to video signals. (Figure 2)

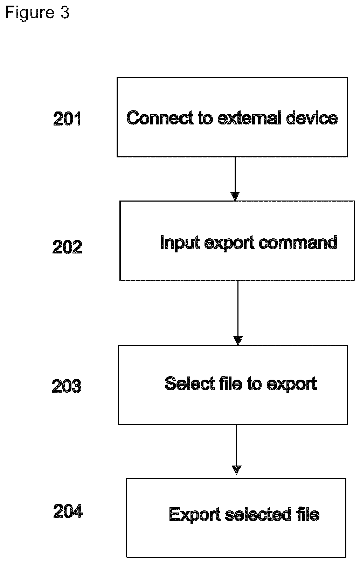

The method of controlling video settings of the television (1) may additionally or alternatively comprise: connecting (201) the television (1) to an external device, receiving (202) an export command for exporting a 3D LUT file from the LUT database (7) to the external device, selecting (203) one or more files to be exported, and exporting (204) selected one or more files to the external device. (Figure 3) The method may additionally comprise searching for connected external devices, and displaying the list of available connected external devices, preferably with a list of relevant files stored therein, for a selection therefrom.

By means of the present invention a television (1) and a video settings control method with improved picture mode management is realized. Owing to configuration of the processing means (6) and the LUT database (7), 3D LUT files per respective picture modes in the LUT database (7) can be easily accessed and modified simply via the user interface (4) of the television (1), obviating the need for additional professional hardware or software. The format of 3D LUT files in the LUT database (7) and provision of import/export options allow a user or developer to conveniently add, modify and customize user-defined picture modes.

## Claims

1. A television (1) comprising: video signal receiving means (2) for receiving video signals, a memory (3) for storing a plurality of preset video settings, a user interface (4) for receiving user input for manipulating preset video settings, a display (5) for displaying processed video signals, and processing means (6) for processing received video signals in accordance with a selected preset video setting and supplying processed video signals to the display (5); **characterized in that** the memory (3) comprises a look-up table (LUT) database (7) for storing a 3D LUT file for each preset video setting.

2. The television (1) according to claim 1, wherein the 3D LUT files are in .cube format.

3. The television (1) according to claim 1 or 2, wherein the processing means (6) is configured to modify, upon receiving a respective input for manipulating preset video settings, the contents of the LUT database (7) in accordance with said input.

4. The television (1) according to claim 3, wherein modifying contents of the LUT database (7) comprises at least one of rearranging 3D LUT files, renaming 3D LUT files, importing a new 3D LUT file, deleting a 3D LUT file, and exporting a 3D LUT file.

5. The television (1) according to any one of preceding claims, wherein the processing means (6) is configured to: receive, via the user interface (4), a command to import a 3D LUT file from an external device connected to the television (1); import said 3D LUT file from the external device; and store the imported 3D LUT file in the LUT database (7).

6. The television (1) according to claim 5, wherein the LUT database (7) comprises storage area allocated for imported 3D LUT files.

7. The television (1) according to any one of preceding claims, wherein the processing means (6) is configured to: receive, via the user interface (4), a command to export a 3D LUT file from the LUT database (7) to an external device connected to the television (1); and export said 3D LUT file to the external device.

8. An image display system comprising a television (1) according to any one of preceding claims.

9. A method of controlling video settings of a television (1) according to any one of claims 1 to 7, wherein the method comprises:
- connecting (101) the television (1) to an external device,
- receiving (102) an import command for importing a 3D LUT file from the external device,
- selecting (103) one or more files to be imported,
- importing (104) selected one or more files to television (1), and
- saving (105) imported one or more files in the LUT database (7).

10. The method according to claim 9, wherein the method further comprises:
- selecting (106) an imported file, and
- applying (107) preset video settings associated with selected file to video signals.

11. A method of controlling video settings of a television (1) according to any one of claims 1 to 7, wherein the method comprises:
- connecting (201) the television (1) to an external device,
- receiving (202) an export command for exporting a 3D LUT file from the LUT database (7) to the external device,
- selecting (203) one or more files to be exported,
- exporting (204) selected one or more files to the external device.

12. Computer software operable, when executed on a television (1) according to any one of claims 1 to 7, to cause one or more processors to perform a method according to any one of claims 9 to 11.
